# EUROPÄISCHE PATENTANMELDUNG

(11) **EP 4 585 186 A1**
(43) Veröffentlichungstag der Anmeldung: **16.07.2025**
(21) Anmeldenummer: 24151014.8
(22) Anmeldetag: 09.01.2024
(51) Int. Cl.: A61C 17/00, A61C 1/12

(54) **ZAHNÄRZTLICHES WINKELSTÜCK**

(71) Anmelder: Kessler, Holger, 80805 München (DE)
(72) Erfinder: KESSLER, Holger, 80805 München (DE); KESSLER, Moritz, 80805 München (DE)
(74) Vertreter: E. Blum & Co. AG

(57) **Zusammenfassung**

Ein Winkelstück (1) für eine zahnärztliche Antriebseinheit (3) weist eine Öffnung (18) am seinem vorderen Ende (1a), eine Kupplung (19) zum Ankoppeln des Winkelstücks (1) an eine Antriebseinheit (3) an seinem hinteren Ende (1b)und ein Befestigungsmittel zum lösbaren Aufnehmen eines Polierkopfes (21) eines Poliereinsatzes (2). Die Öffnung (18) ist dimensioniert zum Einführen einer mit Poliermaterial (23) befüllten und mit dem Polierkopf (21) zu dem Poliereinsatz (2) verbundenen Kartusche (22) durch die Öffnung (18) in das Winkelstück (1). Ein entsprechender Poliereinsatz (2) umfasst den Polierkopf (21) zum Polieren von Zähnen, und eine Kartusche (22) zur Aufnahme eines Poliermaterials (23). Bevorzugt ist der Poliereinsatz (2) ein Einwegprodukt vorgesehen zur Anwendung bei nur einem Nutzer. Winkelstück (1) und Poliereinsatz (2) in kombiniertem Zustand bilden eine Vorrichtung zur zahnärztlichen Behandlung.

## Beschreibung

### Gebiet der Erfindung

Die Erfindung betrifft eine Vorrichtung zum Einsatz bei einer Zahnbehandlung, ein Winkelstück für eine zahnärztliche Antriebseinheit, einen Poliereinsatz für ein zahnärztliches Winkelstück sowie ein Verfahren zum Bestücken eines Winkelstücks mit einem Poliereinsatz.

### Hintergrund

Das Polieren von Zähnen im Rahmen einer zahnärztlichen oder zahnhygienischen Behandlung wird herkömmlich mit Hilfe eines Polierkopfes durchgeführt. Da zum Polieren regelmässig ein Poliermittel, etwa eine Polierpaste zum Abrieb verwendet wird, wird dieses Poliermittel in einem becherförmigen Gefäss bereitgestellt, welches während der Behandlung mittels einer geeigneten ringförmigen Halterung auf einen Finger, vorzugsweise den Ringfinger des zahnärztlichen Personals aufgesteckt wird. Hält der Zahnarzt / die Zahnärztin, der Zahnarzthelfer / die Zahnarzthelferin den vorzugsweise rotierend angetriebenen Polierkopf in der einen Hand und führt damit das Polieren am Patienten durch, so taucht er / sie den Polierkopf in regelmässigen Abständen, beispielweise nach jedem Polieren von zwei Zähnen, in das am Finger der anderen Hand gehaltene Gefäss mit dem Poliermittel.

Das wiederholte Aufnehmen von Poliermittel aus dem Gefäss während der Polierbehandlung eines Patienten ist umständlich und zeitlich aufwändig.

### Darstellung der Erfindung

Insofern ist es Aufgabe der vorliegenden Erfindung, eine Vorrichtung und ein Verfahren anzugeben, welche diese Nachteile bei einer Polierbehandlung von Zähnen verhindern, und insbesondere einen zeiteffizienten und aufwandsärmere Politur von Zähnen ermöglichen.

Gemäss einem ersten Aspekt der Erfindung wird eine Vorrichtung für die Zahnbehandlung vorgeschlagen, welche ein Winkelstück sowie einen in das Winkelstück zumindest teilweise eingeführten Poliereinsatz aufweist. Der Poliereinsatz enthält einen Polierkopf zum Polieren von Zähnen, sowie eine Kartusche zur Aufnahme von Poliermaterial. Das Winkelstück weist eine Öffnung an seinem vorderen Ende auf und eine Kupplung zum Ankoppeln des Winkelstücks an eine Antriebseinheit an seinem hinteren Ende. Der Poliereinsatz ist lösbar in dem Winkelstück gelagert. Die Öffnung des Winkelstücks ist dimensioniert zum Einführen der mit Poliermaterial befüllten Kartusche durch die Öffnung in das Winkelstück. Bei in das Winkelstück eingesetztem Poliereinsatz liegt die Vorrichtung damit zum Gebrauch am Patienten vor.

Der Poliereinsatz ist eine Einheit enthaltend sowohl den Polierkopf zum Polieren der Zähne als auch die Kartusche enthaltend das Poliermittel. Vorzugsweise ist also der Poliereinsatz als Einheit vorgefertigt und liegt dem zahnärztlichen Personal zur Bestückung des entsprechenden Winkelstücks vor. Vorzugsweise sind Kartusche, auch Patrone genannt, und Polierkopf mechanisch miteinander verbunden, z.B. mechanisch gekoppelt, etwa über eine später noch näher beschriebene Manschette.

Der Poliereinsatz ist vorzugsweise als Einwegartikel ausgebildet, welcher für die Polierbehandlung an einem Patienten vorgesehen ist, und nach der entsprechenden Behandlung aus dem Winkelstück entfernt und anschliessend entsorgt wird. Zur Polierbehandlung eines weiteren Patienten wird dann ein neuer, bevorzugt sterilisierter Poliereinsatz verwendet, welcher beispielsweise in einer entsprechenden Verpackung bereitgestellt ist. Hierbei wird die sterile Verpackung, etwa aus Kunststoff und/oder aus Papier basiertem Material aufgerissen, der Poliereinsatz entnommen, und in das / ein desinfiziertes und / oder sterilisiertes Winkelstück eingeführt. Vorzugsweise ist das Füllvermögen der Kartusche und deren Inhalt an Poliermittel so dimensioniert, dass es / er für die Polierbehandlung an einem Patienten ausreicht. Beispielsweise beträgt das Fassungsvermögen der Kartusche bzw. die Portionierung des Poliermittels in einer Kartusche zwischen 1g und 3g, vorzugsweise zwischen 1.5g und 2.5g.

Insofern entfällt die umständliche konventionelle Handhabung des Poliermittels in einem separaten Gefäss. Aufgrund der Integration des Poliermittels in einen Poliereinsatz für ein Winkelstück zusammen mit dem Polierkopf wird der Poliervorgang für das zahnärztliche Personal wie auch die Vor- und Nachbereitungen der Gerätschaften erheblich vereinfacht, auch mit dem Ergebnis einer erheblichen Zeitersparnis in der Behandlung von Patienten. So entfällt das mehrfache, herkömmliche manuelle Aufbringen von Poliermittel auf den Polierkopf. Auch kann jegliche Vor- und Nachbehandlung des Gefässes für das Poliermittel und des Polierkopfes entfallen, da bevorzugt als Einwegartikel ausgebildet. Insofern muss vor der Behandlung nur ein neuer Poliereinsatz in das Winkelstück eingeführt werden. Nach der Behandlung wird der Poliereinsatz als Ganzes wieder aus dem Winkelstück gezogen oder entfernt, inklusive Polierkopf und entleerter oder nur noch teilweiser befüllter Kartusche, und wird entsorgt. Das Winkelstück kann dann zur Behandlung eines weiteren Patienten durch die Aufnahme eines neuen Poliereinsatzes vorbereitet werden.

Das Winkelstück ist bevorzugt ein Winkelstück, welches für die Behandlung mit seinem hinteren Ende auf eine Antriebseinheit aufgesetzt wird. Zwischen Winkelstück und Antriebseinheit sind mechanische und / oder elektrische Schnittstellen definiert, sodass unterschiedliche Winkelstücke für unterschiedliche Behandlungsschritte auf die zahnärztliche Antriebseinheit aufgesetzt werden können. Insbesondere genügt das erfindungsgemässe Winkelstück solchen unter Umständen normierten Schnittstellen. Vorzugsweise weist die Antriebseinheit an der Schnittstelle zum Winkelstück eine Welle auf, welche bei Aktivierung eines Elektromotors der Antriebseinheit, etwa mittels eine Fusspedals, mit einer je nach Stellung des Fusspedals variierenden Drehzahl rotiert. Das Winkelstück weist eine Kupplung auf, welche die Rotation der Antriebswelle aufnimmt, und vorzugsweise in eine Rotation einer Welle des Winkelstücks umsetzt. Diese angetriebene Welle des Winkelstücks bewirkt, wie später detaillierter beschrieben wird, eine Rotation eines Polierkopfes eines in das Winkelstück eingesetzten Poliereinsatzes, sowie bevorzugt auch einen Vorschub des Poliermittels in der Kartusche des in das Winkelstück eingesetzten Poliereinsatzes hin zum Polierkopf, sodass der Polierkopf während seiner Rotation und damit während der Behandlung bevorzugt kontinuierlich, und bevorzugt selbsttätig ohne weiteren Eingriff des behandelnden Personals mit Poliermittel versorgt wird.

Für den modularen Aufbau der erfindungsgemässen Vorrichtung ist der Poliereinsatz zumindest teilweise in das Winkelstück einsetzbar, aber auch wieder lösbar und damit aus dem Winkelstück entfernbar. Wird die Öffnung am vorderen Ende des Winkelstücks als Massstab für die Einführbarkeit des Polieransatzes angesehen, so wird der Poliereinsatz nur teilweise im Winkelstück aufgenommen, insbesondere seine Kartusche, welche vollständig im Inneren des Winkelstücks aufgenommen wird. Dagegen ragt zumindest ein Teil des Polierkopfes für die Behandlung des Patienten aus dem Winkelstück. Durch die Öffnung am vorderen Ende des Winkelstücks wird also der Poliereinsatz in das Winkelstück eingeführt, mit der Kartusche voran, bis zu einer vordefinierten Lagerung des Poliereinsatzes im Winkelstück. Insofern ist die Öffnung des Winkelstücks dimensioniert zum Einführen der mit Poliermaterial befüllten Kartusche durch die Öffnung in das Winkelstück. Bevorzugt weist die, vorzugsweise kreisrunde oder elliptische Öffnung einen Durchmesser zwischen 0.5 cm und 2 cm auf, bevorzugt zwischen 1 und 1.5 cm. Andererseits ist die Lagerung des Poliereinsatzes am / im Winkelstück lösbar ausgestaltet, sodass der Poliereinsatz nach seinem Gebrauch wieder aus dem Winkelstück entfernt werden und durch einen neuen Poliereinsatz ersetzt werden kann. Lösbare Lagerung umfasst insofern den bestimmungsgemässen wiederkehrenden Austausch von Poliereinsätzen pro Winkelstück und schliesst damit eine teilweise Zerstörung des Winkelstücks bei Entfernen eines benutzten Poliereinsatzes aus. Bevorzugt sind Lagerungs- oder Befestigungsmittel für den Poliereinsatz vorgesehen, welche bei eingesetztem Poliereinsatz ein unbeabsichtigtes Lösen von dem Winkelstück verhindern, aber bei beabsichtigtem Austausch des Poliereinsatzes sein Lösen vom Winkelstück gewährleisten.

Das Winkelstück enthält vorzugsweise einen Korpus aus Metall mit einem Hohlraum in seinem Inneren. Dieser Hohlraum ist so dimensioniert, dass er eine vollständig befüllte Kartusche des Poliereinsatzes aufnehmen kann. Hierzu mündet der Hohlraum des Winkelstücks in seine Öffnung am vorderen Ende. Vorzugsweise sind die durch die Öffnung am vorderen Ende definierte Fläche und eine Stirnfläche des Korpus an seinem hinteren Ende nicht-parallel zueinander ausgerichtet sind. Dies bedeutet, dass die Ausrichtung / Längsachse des behandelnden Kopfes, hier des Polierkopfes, axial nicht mit der Antriebswelle zusammenfällt, sondern mit dieser einen Winkel einschliesst. Dies erleichtert das Arbeiten des behandelnden Personals am Patienten. Hierbei kann beispielsweise der Korpus des Winkelstücks selbst einen Winkel aufweisen. Alternativ kann der Korpus des Winkelstücks ohne Winkel ausgebildet sein. Allerdings gibt dann die bevorzugt seitlich angeordnete Öffnung am vorderen Ende die von der Achse der Antriebswelle abweichende Behandlungsrichtung vor.

Das Winkelstück umfasst in einer bevorzugten Weiterbildung eine im Korpus rotierend gelagerte Hülse, bevorzugt aus Metall, sowie ein Getriebe, welches antriebseitig mit der Kupplung und abtriebseitig mit der Hülse zum rotatorischen Antreiben der Hülse verbunden ist. Das Getriebe umfasst beispielsweise Gestänge, Wellen und / oder Zahnräder. Die Hülse ist zumindest teilweise im Hohlraum angeordnet. Sie tritt entweder durch eine Öffnung im Korpus am vorderen Ende heraus, oder ist vollständig im Hohlraum angeordnet und endet vor oder an der Öffnung des Korpus. Die Hülse dient dabei dem rotatorischen Antrieb des Polierkopfes bei in das Winkelstück eingesetztem Poliereinsatz. Insofern ist in einer bevorzugten Weiterbildung der Erfindung der Polierkopf des Poliereinsatzes mit der Hülse gekoppelt, und vorzugsweise lösbar gekoppelt. Dabei ist bevorzugt der Polierkopf verdrehsicher in oder an der Hülse gelagert, d.h. er rotiert zusammen mit der Hülse in gleicher Drehzahl. Im Sinne einer lösbaren Befestigung des Poliereinsatzes im Winkelstück ist der Polierkopf andererseits in oder an der Hülse axial lösbar gelagert, d.h. er kann entgegen seiner Einschubrichtung wieder von der Hülse gelöst werden kann, z.B. zum Austausch des Poliereinsatzes.

Weist die Hülse die Form eines Zylindermantels auf, so definiert ihr Innenumfang bevorzugt die Öffnung des Winkelstücks. Die Hülse kann aber auch die Form eines Konus aufweisen, insbesondere in ihrem vorderen Ende in Richtung der Einschuböffnung. Der Winkel des Konus kann dabei bevorzugt zwischen 2° und 10° betragen, bevorzugt zwischen 3° und 6°. Insbesondere hierbei kann die verdrehsichere Kopplung zwischen Polierkopf und Hülse im Wege eines Kraftschlusses ausgebildet sein, d.h. Polierkopf und Hülse sind durch Reibung miteinander verbunden und stellen alleine durch Friktion die Verdrehsicherheit zueinander her. In diesem Falle ist es bevorzugt, dass der Polierkopf einen ebenfalls hülsenförmigen Abschnitt an seinem hinteren Ende aufweist, der den Kraftschluss mit der Hülse bewirkt. Bevorzugt ist dabei dieser hülsenförmige Abschnitt ohne Konus vorgesehen, also als Zylinder oder Zylindermantel. Es können aber auch zusätzliche oder alternative Mittel für einen Formschluss zwischen Polierkopf, insbesondere seinem hinteren Ende, und Hülse vorgesehen sein, wie etwa Einkerbungen oder Vorsprünge an einer inneren Mantelfläche der Hülse und entsprechenden Gegenstücken an einem Aussenumfang des Polierkopfes, welche ineinander eingreifen und eine Verdrehsicherung des Polierkopfes gegen die Hülse bewirken.

Die Hülse ihrerseits ist als Bestandteil des Winkelstücks bevorzugt mittels ein oder mehrerer Wälzlager, insbesondere Kugellager, im oder am Korpus des Winkelstücks gelagert. Das Getriebe greift abtriebseitig vorzugsweise an der äusseren Mantelfläche der Hülse an. Beispielsweise weist die Hülse an ihrer äusseren Mantelfläche hierfür einen Zahnkranz auf, vorzugsweise integriert in die Hülse oder an der Hülse angebracht, in den ein Zahnrad des Getriebes eingreift zum rotatorischen Antreiben der Hülse. Hierdurch wird ein platzsparender Antrieb der Hülse geschaffen, welcher gleichzeitig die innere Mantelfläche der Hülse für die Kopplung mit dem Poliereinsatz zur Verfügung stellt.

Bevorzugt enthält das Winkelstück auch einen Antrieb zum Fördern des Poliermittels bei eingesetztem Poliereinsatz in Richtung des Polierkopfes. Hierzu enthält das Winkelstück einen Kolben, auch Stempel genannt, zum Austreiben des Poliermaterials aus der Kartusche. Bei vollständig befüllter Kartusche ist der Kolben bevorzugt in einer zurückgezogenen Stellung positioniert, bei ausgetriebenem Poliermaterial bevorzugt in einer ausgefahrenen Stellung, entlang der Längsachse des Winkelstücks. Beim Einsetzen eines neuen Poliereinsatzes in das Winkelstück wird der Kolben bevorzugt manuell aus seiner ausgefahrenen in seine zurückgezogene Stellung überführt. Aus dieser wird der Kolben mittels eines weiteren Getriebes angetrieben, welches antriebseitig mit der Kupplung und abtriebseitig mit dem Kolben verbunden ist zum translatorischen, insbesondere geradlinig translatorischen Antreiben des Kolbens. Insofern setzt das weitere Getriebe die Rotation der Antriebswelle der Antriebseinheit in eine geradlinige translatorische Bewegung des Kolbens um. Derartige Getriebeformen sind dem Fachmann bekannt.

Der Kolben ist dabei in dem Hohlraum geführt, welcher, bei eingesetztem Poliereinsatz mit der befüllter Kartusche ausgefüllt ist. Generell kann der Hohlraum durch eine Aussparung im Korpus gebildet sein, bevorzugt wenn der Korpus des Winkelstücks aus dem Vollen durch Materialabtragung gefertigt wird. In einer Alternative weist der Korpus jedoch ein Gehäuse auf für das Getriebe und für das weitere Getriebe, beispielsweise in Form eines Zylindermantels. Dann kann innerhalb des Zylindermantels ein rohrförmiges Element angeordnet sein, dessen Inneres den Hohlraum zumindest mitdefiniert.

Hinsichtlich der Getriebe ist es bevorzugt, dass die über die Kupplung in das Winkelstück eingetragene Drehzahl durch das Getriebe in eine erste Drehzahl umsetzt, vorzugsweise untersetzt wird. Die erste Drehzahl liegt dabei beispielsweise im Bereich einer üblichen Poliergeschwindigkeit, etwa zwischen 150 und 400 U/min. Dabei wird davon ausgegangen, dass die von der Antriebseinheit eingetragene Drehzahl eher hoch bemessen ist, um auch andere Instrumente wie Bohrer mit ausreichender Drehzahl versorgen zu können. Diese hohe eingetragene Drehzahl wird dann durch das Getriebe herabgesetzt in die deutlich geringere, für das Polieren angemessene erste Drehzahl. Das weitere für den Kolben verantwortliche Getriebe setzt die über die Kupplung eingetragene Drehzahl in eine zweite Drehzahl um, vorzugsweise durch Untersetzung, welche zweite Drehzahl bevorzugt noch niedriger ist als die erste Drehzahl, z.B. im Bereich zwischen 10 und 25 U/min, bevorzugt zwischen 15 und 20 U/min. Dies vor dem Hintergrund, dass der daraus resultierende Vorschub des Kolbens gering dimensioniert ist im Verglich zur gewünschten Drehzahl des Polierkopfes. Das weitere Getriebe ist zudem ausgebildet zum Umsetzen der zweiten Drehzahl in einen geradlinigen Vorschub des Kolbens.

Hierdurch kann gleichzeitig das Poliermittel hin zum Polierkopf gefördert und von diesem aufgenommen werden, während der Polierkopf rotiert. Dies erfolgt in einer voll automatisierten Weise, sodass bei Betätigung des Antriebs via Antriebseinheit der Polierkopf in Rotation versetzt und gleichzeitig das Poliermittel dem Polierkopf zugeführt wird. Dabei erfolgt der Nachschub an Poliermittel abhängig von antriebseitigen Drehzahl. Somit kann das zahnärztliche Personal unterbrechungsfrei arbeiten, insbesondere Polieren. In einer Alternative kann, etwa durch einen Wahlschalter am Winkelstück, das zweite Getriebe von dem Antrieb entkoppelt werden, oder der Kolben vom weiteren Getriebe entkoppelt werden, sodass auch ein Polierbetrieb mit dem Polierkopf ohne gleichzeitige Zufuhr des Poliermittels wahlweise möglich ist.

In einer vorteilhaften Weiterbildung ist der Kolben vom weiteren Getriebe entkoppelbar, vorzugsweise durch ein Betätigungselement, wie etwa einen Hebel, Schieber oder Schalter. Im gekoppelten Zustand wird das Poliermittel gefördert. Im entkoppelten Zustand läuft der Kolben axial frei und kann in seine Ausgangsposition zurückgeschoben werden, beispielsweise infolge des Einschiebens einer neuen Kartusche in den Hohlraum des Winkelstücks. Beispielsweise kann ein solches Betätigungselement am Winkelstück angeordnet sein, sodass es manuell durch das behandelnde Personal betätigt und damit der Kolben durch manuelle Aktivierung des Betätigungselements aus- und eingekoppelt werden kann. In einer Alternative kann das Betätigungselement auch im Winkelstück derart angeordnet sein, dass es beim Entfernen oder Herausziehen eines benutzten Poliereinsatzes infolge dieses Vorgangs betätigt wird, und den Kolben auskoppelt für das nachfolgende Einsetzen eines neuen Poliereinsatzes und des damit verbundenen Überführens des Kolbens in seine Ausgangsposition. Andererseits ist das Betätigungselement im Winkelstück bevorzugt derart angeordnet, dass es am Ende der Einführvorgangs eines Poliereinsatzes in das Winkelstück die Kopplung des Kolbens mit dem weiteren Getriebe bewirkt, sodass im Folgenden das Poliermittel in dem neuen Poliereinsatz gefördert wird.

Ein weiterer Aspekt der vorliegenden Erfindung betrifft ein Winkelstück für eine zahnärztliche Antriebseinheit. Dieses Winkelstück ist bevorzugt ein Winkelstück wie in obiger Vorrichtung und ihren Weiterbildungen genutzt, jedoch ohne eingesetzten Poliereinsatz. Die mit Bezug auf die Vorrichtung genannten Ausführungsbeispiele des Winkelstücks und ihre Vorteile sind auch für das Winkelstück als solches offenbart. Insbesondere weist das erfindungsgemässe Winkelstück eine Öffnung am seinem vorderen Ende, eine Kupplung zum Ankoppeln des Winkelstücks an eine Antriebseinheit an seinem hinteren Ende, sowie ein Befestigungsmittel zum lösbaren Aufnehmen eines Polierkopfes eines Poliereinsatzes auf. Die Öffnung ist dimensioniert zum Einführen einer mit Poliermaterial befüllten und mit dem Polierkopf zu dem Poliereinsatz verbundenen Kartusche durch die Öffnung in das Winkelstück.

In vorteilhaften Weiterbildungen der Erfindung weist das Winkelstück ein oder mehrere der nachfolgenden Merkmale auf:
- einen Korpus mit einem Hohlraum in seinem Inneren zur Aufnahme der Kartusche, welcher Hohlraum in die Öffnung mündet,
- eine im Korpus rotierend gelagerte Hülse,
- ein Getriebe, welches antriebseitig mit der Kupplung und abtriebseitig mit der Hülse zum rotatorischen Antreiben der Hülse verbunden ist,
- welche Hülse zumindest teilweise im Hohlraum angeordnet ist und durch eine Öffnung im Korpus am vorderen Ende tritt oder im Hohlraum vor oder an der Öffnung des Korpus endet,
- die Hülse weist die Form eines Zylindermantels auf,
- eine innere Mantelfläche der Hülse weist eine oder mehrere Vertiefungen oder Erhebungen als Befestigungsmittel für den Polierkopf auf,
- die Hülse ist mittels ein oder mehrerer Wälzlager, insbesondere Kugellager, im Korpus gelagert,
- die Hülse wird an ihrer äusseren Mantelfläche durch das Getriebe rotatorisch angetrieben,
- die Hülse weist an ihrer äusseren Mantelfläche einen Zahnkranz auf, vorzugsweise integriert in die Hülse oder an der Hülse angebracht, in den ein Zahnrad des Getriebes eingreift zum rotatorischen Antreiben der Hülse,
- einen Kolben zum Austreiben des Poliermaterials aus der Kartusche bei eingesetztem Poliereinsatz,
- ein weiteres Getriebe, welches antriebseitig mit der Kupplung und abtriebseitig mit dem Kolben verbunden ist zum translatorischen, insbesondere geradlinig translatorischen Antreiben des Kolbens,
- der Kolben ist in dem Hohlraum geführt,
- der Hohlraum wird durch eine Aussparung im Korpus gebildet,
- der Korpus weist ein Gehäuse auf für das Getriebe und für das weitere Getriebe, sowie ein rohrförmiges Element im Gehäuse, wobei das Innere des rohrförmigen Elements den Hohlraum zumindest mitdefiniert.

In einer vorteilhaften Weiterbildung der Erfindung weist das Winkelstück zudem einen Lichtleiter auf sowie eine Lichtleiterschnittstelle an seinem hinteren Ende. Diese Schnittstelle mag dazu dienen, von der Antriebseinheit bereitgestelltes Licht in den Lichtleiter einzukoppeln. Der Lichtleiter tritt bevorzugt nahe bei der Öffnung am vorderen Ende des Winkelstücks aus, um den Arbeitsbereich zu beleuchten.

Ein weiterer Aspekt der vorliegenden Erfindung betrifft einen Poliereinsatz für ein zahnärztliches Winkelstück, umfassend einen Polierkopf zum Polieren von Zähnen, und eine Kartusche zur Aufnahme eines Poliermaterials. Dieser Poliereinsatz ist bevorzugt ein Poliereinsatz wie in obiger Vorrichtung und ihren Weiterbildungen genutzt, jedoch ohne Winkelstück als Träger für den Poliereinsatz. Die mit Bezug auf die Vorrichtung aufgeführten Ausführungsbeispiele des Poliereinsatzes und ihre Vorteile seien auch für den Poliereinsatz als solches offenbart.

Vorzugsweise ist der Poliereinsatz als Einwegprodukt ausgebildet, vorzugsweise vorgesehen zur Anwendung bei nur einem Nutzer.

Vorzugsweise ist die Kartusche aus elastischem Material hergestellt ist, vorzugsweise schlauchförmig ausgebildet, bevorzugt aus Kunststoff. Damit ist die Kartusche leicht einführbar in den Hohlraum des Winkelstücks, insbesondere, wenn die Kartusche auf ihrem Weg von der (Eintritts-)Öffnung in dem Hohlraum einer Krümmung folgen muss.

Das Poliermittel ist bevorzugt ein pastöses Material.

Der Polierkopf weist bevorzugt einen Polierkelch, z.B. aus Weichgummi, auf, welcher sich beim Polieren an die Zahnform anpasst. Alternativ enthält der Polierkopf eine Polierbürste, z.B. mit Nylon- oder sonstigen Borsten.

Zum Durchtritt des Poliermittels bei entsprechender Förderung aus der Kartusche in den Polierkopf, etwa durch den Kolben eines zugehörigen Winkelstücks, weist der Polierkopf in seinem hinteren Bereich, welcher beispielhaft auch der Ankopplung an die Hülse dient, vorzugsweise eine zentrale, axiale Durchtrittsöffnung auf.

In einer vorteilhaften Weiterbildung des Poliereinsatzes sind der Polierkopf und die Kartusche rotationsfrei miteinander verbunden sind. Rotationsfrei heisst hierbei, dass insbesondere wenn der Polierkopf rotiert, die Kartusche nicht dieser Rotation folgt, also rotatorisch von dem Polierkopf entkoppelt ist. Ein beispielhaftes Mittel für eine solche Kopplung kann eine Manschette zwischen Polierkopf und Kartusche sein dergestalt, dass eine Rotation des Polierkopfes nicht auf die Kartusche übertragen wird. Beispielhaft sind der Polierkopf, insbesondere sein hinteres Ende, und / oder die Kartusche, insbesondere ihr vorderes Ende, mittels Wälz-, insbesondere Kugellager in der Manschette gelagert. Diese Lagerung der Kartusche am Polierkopf verhindert ein Mitdrehen der Kartusche bei angetriebenem Polierkopf, welches Mitdrehen im Winkelstück die Kartusche beschädigen oder die Rotation des Polierkopfes verhindern würde.

In einer weiteren vorteilhaften Weiterbildung der Erfindung weist der Poliereinsatz, und insbesondere seine Kartusche, eine Anzeige auf für den Füllstand der Kartusche auf. In einer Ausführung kann dabei das Winkelstück einen optisch transparenten Bereich aufweisen, etwa in Form eine transparenten Stücks Glas oder Kunststoffs in seinem Korpus, welche die Sicht freigibt auf die Kartusche. In dieser Ausführung kann von der dann sichtbaren Position des Kolbens auf den Füllstand in der Kartusche rückgeschlossen werden. Die Anzeige kann auch einen Kontrollläufer umfassen, welcher die noch in der Kartusche verbleibende Menge an Poliermaterial anzeigt, also den Füllstand. Auch hier kann der Korpus einen transparenten Bereich aufweisen zum Inspizieren des Kontrollläufers. Im Falle eines Kontrollläufers kann dieser beispielsweise durch den Kolben verschoben werden. Auch kann ein solcher Kontrollläufer am Winkelstück angeordnet sein, insbesondere, wenn seine Bewegung mit derjenigen des Kolbens gekoppelt ist. Ferner kann eine Beleuchtung der Anzeige, bzw. des Kontrollläufers vorgesehen sein, etwa mittels Lichtleiter oder sonstige Leuchte im Winkelstück.

Gemäss einem weiteren Aspekt der vorliegenden Erfindung ist ein Verfahren vorgestellt zum Bestücken eines Winkelstücks nach einer der vorhergehenden Ausführungen mit einem Poliereinsatz nach einer der vorhergehenden Ausführungen, umfassend die Schritte: Einführen des Poliereinsatzes mit der Kartusche voran in die Öffnung des Winkelstücks, und verdrehsicheres aber lösbares Anordnen des Polierkopfes in der Hülse des Winkelstücks.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Figur 1 einen Poliereinsatz in einer teilweise transparenten Seitenansicht, gemäss einem Ausführungsbeispiel der Erfindung;
Figur 2 ein Winkelstück in einer perspektivischen Ansicht, gemäss einem Ausführungsbeispiel der Erfindung;
Figur 3 eine Vorrichtung mit einem mit einem Poliereinsatz bestückten Winkelstück in einer teilweise transparenten, perspektivischen Ansicht, gemäss einem Ausführungsbeispiel der Erfindung;
Figur 4 ein Flussdiagram illustrierend ein Verfahren zum Bestücken eines Winkelstücks mit einem Poliereinsatz, gemäss einem Ausführungsbeispiel der Erfindung.

### Detaillierte Figurenbeschreibung

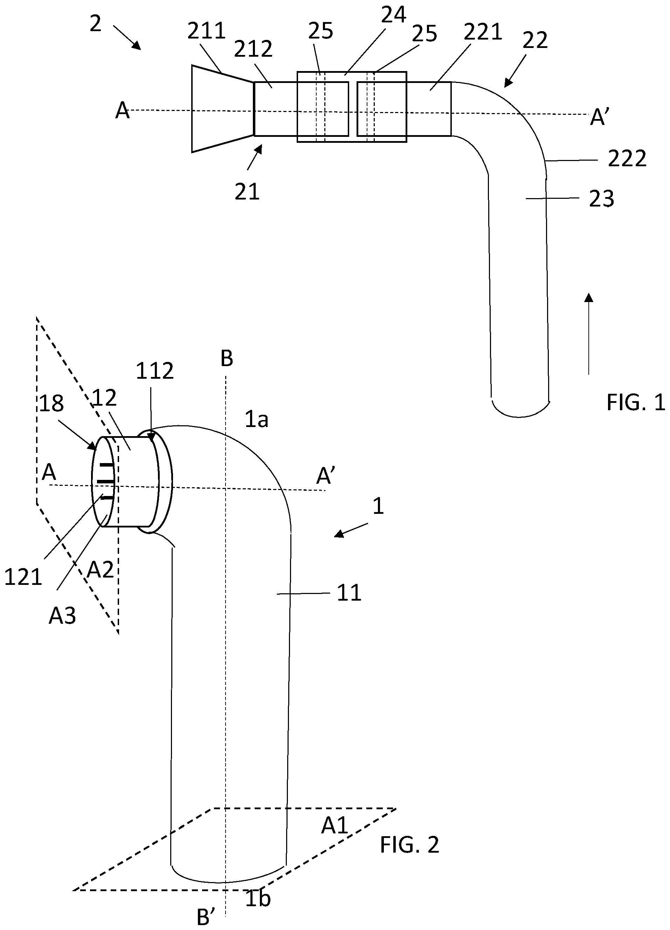

Figur 1 zeigt einen Poliereinsatz in einer teilweise transparenten Seitenansicht, gemäss einem Ausführungsbeispiel der Erfindung. Der Poliereinsatz 2 umfasst einen Polierkopf 21 und eine Kartusche 22.

Der Polierkopf 21 dient der Behandlung von Zähnen eines Patienten. Durch Rotieren des Polierkopfes um seine Längsachse A - A` werden die Zähne des Patienten poliert, d.h. beispielsweise Unebenheiten im Zahnschmelz geglättet und Zahnstein entfernt. Der Polierkopf 21 enthält vorliegend einen Kopf 211, der sich kelchförmig öffnet. Ein solcher Kopf 211 wird auch Polierkelch genannt. Alternativ kann der Kopf 211 auch als Polierbürste mit Borsten ausgebildet sein. Der Polierkopf 21 enthält ferner einen Rumpf 212, welcher der Ankopplung des Polierkopfes 21 an eine Kartusche 22 dient. Kopf 211 und Rumpf 212 des Polierkopfes 21 können einstückig ausgebildet sein, oder aber auch mehrstückig. Eine mehrstückige Ausbildung empfiehlt sich dann, wenn Kopf 211 und Rumpf 212 aus unterschiedlichen Materialien herzustellen sind. Insbesondere kann dabei das Material des Kopfes 211 an die Poliereigenschaft angepasst sein, wohingegen das Material des Rumpfes 212 ausgerichtet ist auf die Ankopplung an die Kartusche 22 oder an eine später beschriebene Manschette 24.

Die Kartusche 22 umfasst vorliegend ein Behältnis in Form eines Schlauches 222, welcher verformbar, bevorzugt elastisch ausgebildet ist. Die Kartusche 22, und insbesondere ihr Behältnis dient der Aufnahme eines Poliermittels 23, welches Poliermittel 23 dem Polierkopf 21 während eines Poliervorgangs zugeführt wird. Das Poliermittel 23 unterstützt den Abschleifvorgang beim Polieren von Zähnen.

Die Kartusche 22 enthält ihrerseits einen Kopf 221, bevorzugt aus einem nicht oder wenig elastischen Material, welcher Kopf 221 der Anbindung der Kartusche 22 an den Polierkopf 21 dient.

Bevorzugt weisen Rumpf 212 des Polierkopfes 21 sowie Kopf 221 der Kartusche 22 Hülsen- oder Rohrform auf, bevorzugt zylindrische Rohrform.

Es ist eine Manschette 24 zum Koppeln von Polierkopf 21 und Kartusche 22 vorgesehen. Die Manschette 24 weist bevorzugt ebenfalls Hülsen- oder Rohrform auf und ist in der Figur 1 transparent eingezeichnet, sodass der von der Manschette 24 umschlossene Rumpf 212 und Kopf 221 in ihrer Lage zueinander ersichtlich sind. Bevorzugt liegen Rumpf 212 und Kopf 121 nicht aneinander an, sollen sie doch gerade nicht rotatorisch gekoppelt sein. Die Kartusche 22 mit ihrem Kopf 221 soll bevorzugt nicht in Rotation versetzt werden, wenn der Polierkopf 21 mit seinem Rumpf 212 um die Achse A - A` zum Polieren dreht. Insofern sind Polierkopf 21 und Kartusche 22 hinsichtlich einer Drehbewegung um die Achse A - A` entkoppelt. Dies kann beispielsweise durch zwei in Figur 1 strichiert angedeutete Kugellager 25 erzielt werden: Das erste Kugellager 25 dreht zwischen Manschette 24 und Polierkopf 21, das zweite Kugellager 25 dreht zwischen Manschette 24 und Kartusche 22.

Der Poliereinsatz 2 stellt insbesondere eine Einheit dar, sind Polierkopf 21 und Kartusche doch miteinander mechanisch verbunden, wenn auch rotatorisch entkoppelt wie zuvor beschrieben. Durch einen unten beschriebenen Mechanismus wird das Poliermaterial 23 beim Rotieren des Polierkopfs 21 in Richtung Polierkopf 21 gefördert, d.h. in Pfeilrichtung.

Die eingezeichnete abgewinkelte Form des Schlauches 222 ist seiner Elastizität geschuldet, unter der Prämisse, dass die eingezeichnete Längsachse A - A' des Polierkopfes 21 die Horizontale definiert, und die dazu orthogonale, vertikale Richtung die Richtung der Schwerkraft anzeigt, wodurch der befüllte Schlauch 222 nach unten knickt. Darüber hinaus zeigt die in Figur 1 gezeichnete Ausrichtung der Komponenten in etwa auch die Ausrichtung an, wenn der Poliereinsatz 2 in ein Winkelstück eingesetzt ist.

Der Poliereinsatz dient also dem Einsatz in ein zahnärztliches Winkelstück. Dabei ist der Poliereinsatz bevorzugt ein Einwegartikel: Pro Patient soll aus hygienischen Gründen und wegen seiner Entleerung ein Poliereinsatz zur Anwendung kommen, der nach der Anwendung entsorgt wird. Das Winkelstück, welches einen solchen Poliereinsatz aufnimmt, ist dagegen selbstverständlich ein Instrument, welches wiederholt zur Anwendung kommt, zumal es desinfizierbar bzw. sterilisierbar ist.

Insofern ist es bevorzugt, dass die Materialien des Poliereinsatzes zum einen kostengünstig in der Herstellung, bevorzugt aber auch gut recyclierbar sind. Vorzugsweise sind alle Komponenten des Poliereinsatzes aus Kunststoff hergestellt.

Figur 2 zeigt ein Winkelstück 1 in einer perspektivischen Ansicht, gemäss einem Ausführungsbeispiel der Erfindung. Das Winkelstück 1 weist eine Länsausdehnung entlang der Achse B - B` auf. Sein hinteres Ende 1b ist zur Ankopplung an eine zahnärztliche Antriebseinheit ausgebildet. Es weist beispielsweise eine in der Darstellung nach Figur 2 nicht sichtbare Kupplung zur Antriebseinheit auf, welche etwa zur Aufnahme einer sich drehenden Welle der Antriebseinheit ausgebildet ist.

An seinem vorderen Ende 1a weist das Winkelstück 1 eine Öffnung 18 auf. Eine durch die Öffnung 18 definierte Fläche A2 ist dabei vorliegend um 90 Grad gedreht zur durch die Stirnseite am hinteren Ende 1a des Winkelstücks 1 definierten Fläche A1. Dies kennzeichnet die grundlegende Eigenschaft eines Winkelstücks 1, bei dem die "Antriebsachse" B - B` nicht mit der "Arbeitsachse" A - A` übereinstimmt. Der Winkel zwischen Antriebsachse und Arbeitsachse, bzw. zwischen der zuvor definierten Flächen A1 und A2, beträgt bevorzugt zwischen 80° und 180°. Vorliegend wird der Winkel durch eine Krümmung des Korpus 11 des Winkelstücks 1 und die Anordnung der Öffnung 18 am vorderen Ende 1a bestimmt. Alternativ kann aber auch der Korpus 11 eher in einem mittleren Bereich zwischen vorderem und hinterem Ende 1a, bzw. 1b einen Knick aufweisen und somit ein Winkel erzielt werden.

Bevorzugt ist der Korpus 11 des Winkelstücks 1 aus Metall hergestellt. Alternativ, und ohne konkreten Bezug auf dieses Ausführungsbeispiel kann der Korpus auch aus sterilisierbarem Kunststoff oder Keramik hergestellt sein.

Das Korpus 11 des Winkelstücks 1 weist an seinem vorderen Ende 1a seinerseits eine Öffnung 112 auf. Aus dieser Öffnung 112 ragt vorliegend eine Hülse 12 hervor, also ein kurzer, vorzugsweise zylinderförmiger Rohrabschnitt. Die Hülse 12 überragt damit den Korpus 11. Die Hülse 12 ihrerseits definiert mit ihrem Innendurchmesser die Öffnung 18 des Winkelstücks 1. Es ragt nur ein Teil der Hülse 12 aus der Öffnung 112 des Korpus 11 heraus, der andere Teil ist im Inneren des Korpus 11 gelagert und in Figur 2 nicht ersichtlich.

Die Hülse ist dabei, bevorzugt mit ihrem Abschnitt im Inneren des Korpus 11 drehend gelagert. Die Hülse 12 kann damit eine Rotation um die Achse A - A' vollziehen, gegen den stationären Korpus 11.

Die innere Mantelfläche A3 der Hülse 12 kann bevorzugt ein oder mehrere Einkerbungen oder Erhebungen 121 aufweisen, schematisch als Striche eingezeichnet, zur drehsicheren, aber lösbaren Anordnung des Polierkopfes in der Hülse. Alternativ können andere Befestigungsmittel an der Hülse 12 vorgesehen sein zur Aufnahme des Polierkopfes. Der Polierkopf ist vorzugsweise lösbar mit der Hülse 12 verbunden. Auch Rasthaken o.ä. Vorkehrungen können der lösbaren Befestigung an der Hülse 12 dienen. Drehsicher in diesem Kontext heisst, dass Hülse 12 und Polierkopf 21 nicht gegeneinander rotieren können, sondern miteinander drehfest gekoppelt sind, und damit die gleiche Rotation vollziehen, ist auch nur eines der Elemente rotatorisch angetrieben. Das angetriebene Element ist bevorzugt die Hülse 12. Die drehfeste Kopplung kann durch einen Formschluss zwischen Hülse 12 und Polierkopf 21 erzielt werden, oder durch einen Kraftschluss. In letzterem Falle ist es bevorzugt, dass die Hülse 12 Konusform aufweist, also Kegelstumpfform, mit sich nach aussen aufweitender Öffnung 18. In eine solche Hülse 12 kann dann der Polierkopf 21 insbesondere mit seinem dann vorzugsweise ebenfalls konusförmigen Rumpf 212 eingeführt werden, bis es zu einem Reibschluss zwischen Rumpf 212 und Hülse 12 kommt. So ist der Polierkopf 21 drehsicher in der Hülse 12 gelagert, aber auch wieder durch Herausziehen des Polierkopfes 21 von dieser lösbar, beispielsweise nachdem die Behandlung eines Patienten beendet ist und soll ein weitere Patient mit einem neuen Poliereinsatz behandelt werden soll.

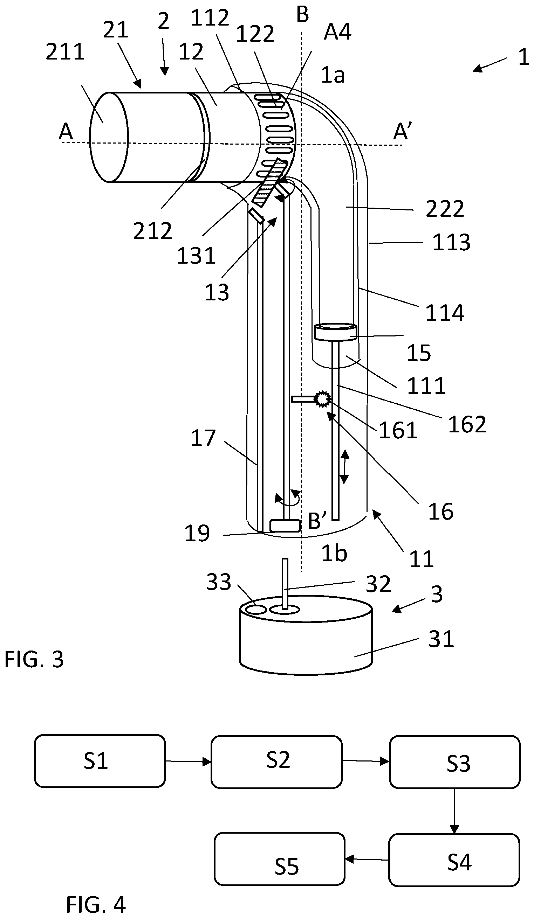

Bereits aus den Figuren 1 und 2 ist ersichtlich, dass zu Beginn der Behandlung eines Patienten ein (unbestücktes) Winkelstück mit einem Poliereinsatz zu bestücken ist. Hinsichtlich des Verfahrens zum Bestücken eines Winkelstücks mit einem Poliereinsatz wird auf Figur 4 verwiesen, welches ein Ausführungsbeispiel des Bestückens zeigt. Das Flussdiagramm zeigt aber auch den weiteren Verlauf der Handhabung des erfindungsgemässen Winkelstücks.

Schritt S1 repräsentiert dabei das Einführen eines neuen und mit Polierpaste befüllten Poliereinsatzes in das Winkelstück. Wie zuvor beschrieben, liegt der Poliereinsatz dabei als ein Bauteil vor, welches eine Einheit bildet: Kartusche und Polierkopf sind also mechanisch miteinander verbunden. Das Einführen der Kartusche erfolgt durch die Öffnung des Winkelstücks, also im Falle des Winkelstücks nach Figur 3 durch die durch die Hülse 12 definierte Öffnung 18. Hierbei wird der Poliereinsatz mit der Kartusche 22 voran in die Öffnung 18 des Winkelstücks 1 eingeführt. Die Kartusche 22 wird einem später noch zu beschreibenden Hohlraum im Korpus des Winkelstücks aufgenommen. Der Polierkopf 21 wird demgemäss zuletzt in Richtung Öffnung 18 geführt. Je nach Befestigungsmittel verrastet oder verklemmt er mit der Hülse 12.

Dieser Schritt des verdrehsicheren Anordnens des Polierkopfes 21 in der Hülse 12 des Winkelstücks 1 ist durch Schritt S2 in Figur 4 repräsentiert. Schritt S3 stellt bevorzugt die Durchführung des Polierverfahrens am Patienten dar. Nach dessen Beendigung wird in Schritt S4 die lösbare Verbindung zwischen Hülse 12 und Polierkopf 21 wieder gelöst, etwa nur durch Herausziehen des Polierkopfes aus der Hülse 12 mit einer die Reibkraft überwindenden Kraft, bevor dann in Schritt S5 auch die nun leere oder zumindest teilweise leere Kartusche 22 durch die Hülse 12 und die Öffnung 18 aus dem Winkelstück 1 gezogen wird, bevorzugt durch ein Auseinanderziehen des am Polierkopf gehaltenen Poliereinsatzes 2 und dem Winkelstück 1. Der benutzte Poliereinsatz 2 kann nachfolgend entsorgt werden.

Figur 3 zeigt eine Vorrichtung mit einem mit einem Poliereinsatz 2 bestückten Winkelstück 1 in einer transparenten, perspektivischen Ansicht, gemäss einem Ausführungsbeispiel der Erfindung. Dabei ist das Winkelstück 1 bevorzugt das Winkelstück 1 aus Figur 2, und der Poliereinsatz 2 der Poliereinsatz 2 aus Figur 1. Gleiche Elemente sind auch darüber hinaus durch die gleichen Bezugszeichen gekennzeichnet.

Der Korpus 11 des Winkelstücks 1 weist vorliegend ein Gehäuse 113 auf, bevorzugt ein hohlzylindrisches Gehäuse 113, welches an seinem unteren Ende und damit an dessen Stirnseite eine nur schematisch eingezeichnete Kupplung 19 aufweist. Die Kupplung 19 dient dabei der Aufnahme einer Welle 32 einer ebenfalls schematisch eingezeichneten Antriebseinheit 3. Diese Antriebseinheit 3, schematisch repräsentiert durch einen Korpus 31, weist bevorzugt einen Elektromotor auf zum Antreiben der Welle 32. Vorzugsweise kann die Drehzahl des Antriebs und damit der Welle 32 mittels eines Fusspedals an der Antriebseinheit gesteuert werden. Ferner weist die Antriebseinheit 3 noch eine Lichtleiterschnittstelle 33 auf. Die Antriebseinheit 3 weist die diversen Schnittstellen an ihrer Stirnseite auf, sodass Winkelstück 1 und Antriebseinheit 3 mit ihren Stirnseiten auch mechanisch, lösbar gekoppelt werden. Die Antriebseinheit 3 kann zwischen dem in Figur 3 gezeigten Teil und dem stationären Elektromotor einen Kabelschlauch aufweisen, sodass eine räumlich flexible Behandlung des Patienten mit dem Winkelstück 1 gewährleistet ist.

Am vorderen Ende 1a des Winkelstücks 1 ist nun wiederum die aus der Öffnung 112 des Korpus 11 ragende Hülse 12 gezeigt, aus der zumindest der vorderer Teil, als der Kopf 211 des Polierkopfes 21 ragt. Der Rumpf 212 des Polierkopfs 21 ist nur angedeutet sichtbar und ist überwiegend in der Hülse 12 aufgenommen und darin mechanisch drehfest aber lösbar, insbesondere axial lösbar gelagert.

Bei an dieser Stelle transparent gezeigtem Korpus 11 ist ersichtlich, dass der im Korpus 11 angeordnete Abschnitt der Hülse 12 an seiner äusseren Mantelfläche A4 einen Zahnkranz 122 aufweist, entweder integriert in die Hülse 12 in Form von Erhebungen oder Vertiefungen, oder aber als auf die Hülse 12 aufgesetzter und mit dieser drehfest verbundener Zahnkranz 122. Ein Getriebe 13 verbindet nun die Kopplung 19 am hinteren Ende 1b des Winkelstücks 1 mit diesem Zahnkranz 122, sodass bei angeschlossener Antriebseinheit, die rotierende Welle 32 über Gestänge, Zahnräder o.ä. Bestandteile des Getriebes 13 eine Rotation der Hülse 12 um die Drehachse A - A' bewirkt, und damit auch des Polierkopfes 21, mit der zum Polieren erwünschten Drehzahl. Das Getriebe 13 bewirkt also zum einen ein Umsetzen der Drehrichtung der Welle 32 in die Drehrichtung der Hülse 12, als auch, falls erforderlich, ein Über- oder Untersetzen der Drehzahl der Antriebswelle 32. Beispielhaft ist ein Zahnrad 131 des Getriebes 13 eingezeichnet, welches mit dem Zahnkranz 122 der Hülse 12 zusammenwirkt und diesen antreibt, sodass die Hülse 12 in Folge rotiert.

Der Schlauch 222 der Kartusche 22 ist in einem Hohlraum 111 des Korpus 11 des Winkelstücks 1 aufgenommen. Der Hohlraum 111 wird vorliegend gebildet durch ein rohrförmiges Element 114 in einem Gehäuse 113 des Winkelstücks 1. Insofern wird in dieser Variante angenommen, dass das Winkelstück 1 ein dünnwandiges Gehäuse 113 aufweist, in dessen Inneren etwa das Getriebe 13 angeordnet ist. Das rohrförmige Element 114 ist dann am Gehäuse 113 befestigt und dient der Aufnahme des Schlauches 222. In einer Alternative ist der Korpus 11 des Winkelstücks 1 aus vollem Stück hergestellt, und der Hohlraum 111 für die Kartusche 22 ist etwa durch Fräsen oder ähnlichem subtraktivem Verfahren aus dem vollen Stück geformt. Gleichsam kann auch der für das Getriebe 13 benötigte Raum im Korpus 11 aus dem vollen Stück geformt sein.

In dem Hohlraum 111 ist ein Kolben 15 geradlinig entlang der Achse B - B` verschiebbar gelagert. Dieser Kolben 15 wird durch den Hohlraum 111 geführt. Der Antrieb des Kolbens 15 erfolgt über ein weiteres Getriebe 16, welches schematisch in Figur 3 gezeigt ist. Vorzugsweise ist das weitere Getriebe 16 antriebseitig mit der Kupplung 19 verbunden und setzt damit die Eingangsdrehzahl der Antriebswelle 13 um. Diese rotatorische Bewegung ist durch das weitere Getriebe 16 in eine geradlinig translatorische Bewegung des Kolbens 15 umgesetzt. Hierzu mag eine Zahnstange 162 des weiteren Getriebes 16 beitragen, welche in Richtung des Doppelpfeiles bewegbar ist und bevorzugt durch ein Zahnrad 161 des weiteren Getriebes 16 angetrieben wird.

Wird das mit dem Poliereinsatz 2 bestückte Winkelstück 1 also über die Antriebswelle 32 angetrieben, so wird nicht nur der Polierkopf 21 via Hülse 12 in Rotation versetzt, sondern auch der Kolben 15 angetrieben und in Richtung des Schlauches 222 gedrückt. Aufgrund der Definition des Hohlraums 111, welcher kein Ausweichen des Schlauches 222 und der darin befindlichen Poliermasse 23 erlaubt, wird die Poliermasse 23 hin zum Polierkopf 21 gefördert, wo sie austreten kann. Das weitere Getriebe 16 bewirkt vorzugsweise eine Untersetzung der Drehzahl der Antriebswelle 32, ist doch der Vorschub des Kolbens 15 nur mit geringer Geschwindigkeit erforderlich.

Der Korpus 11 des Winkelstücks 1enthält bevorzugt einen Lichtleiter 17, welcher mit der Lichtleiterschnittstelle 32 der Antriebseinheit 3 bei aufgesetztem Winkelstück 1 verbunden ist. Der Lichtleiter 17 tritt am vorderen Ende 1a des Winkelstücks 1 in Behandlungsrichtung aus, sodass bei geeigneter Ansteuerung einer Lichtquelle in der Antriebseinheit 3 der Behandlungsort unterstützend beleuchtet werden kann.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

### Bezugszeichenliste

- 1: Winkelstück
11 Korpus
111 Hohlraum
112 Öffnung
A1 Stirnfläche
A2 Fläche Öffnung
113 Gehäuse
114 rohrförmiges Element
12 Hülse
121 Vertiefung oder Erhebung
122 Zahnkranz
A3 innere Mantelfläche
A4 äussere Mantelfläche
13 Getriebe
131 Zahnrad
15 Kolben
16 weiteres Getriebe
161 Zahnrad
162 Zahnstange
17 Lichtleiter
18 Öffnung
19 Kupplung
1a vorderes Ende
1b hinteres Ende
- 2: Poliereinsatz
21 Polierkopf
211 Kopf
212 Rumpf
22 Kartusche
221 Kopf
222 Schlauch
23 Poliermaterial
24 Manschette
25 Kugellager
- 3: Antriebseinheit
31 Korpus
32 Antriebswelle
33 Lichtleiterschnittstelle

## Patentansprüche

1. Vorrichtung für die Zahnbehandlung, aufweisend
- ein Winkelstück (1) mit einer Öffnung (18) an seinem vorderen Ende (1a) und mit einer Kupplung (19) zum Ankoppeln des Winkelstücks (1) an eine Antriebseinheit (3) an seinem hinteren Ende (1b),
- einen Poliereinsatz (2) mit einem Polierkopf (21) zum Polieren von Zähnen und mit einer Kartusche (22) zur Aufnahme eines Poliermaterials (23),
bei dem der Poliereinsatz (2) lösbar in dem Winkelstück (1) gelagert ist, und
bei dem die Öffnung (18) dimensioniert ist zum Einführen der mit Poliermaterial (23) befüllten Kartusche (22) durch die Öffnung (18) in das Winkelstück (1) .

2. Vorrichtung nach Anspruch 1,
bei der das Winkelstück (1) einen Korpus (11) mit einem Hohlraum (111) in seinem Inneren zur Aufnahme der Kartusche (22) aufweist, welcher Hohlraum (111) in die Öffnung (18) mündet,
vorzugsweise bei der eine Stirnfläche (A1) des Korpus (11) am hinteren Ende (1b) und eine durch die Öffnung (18) am vorderen Ende (1a) definierte Fläche (A2) nicht-parallel zueinander ausgerichtet sind.

3. Vorrichtung nach Anspruch 2, bei dem das Winkelstück (1) umfasst:
eine im Korpus (11) rotierend gelagerte Hülse (12),
ein Getriebe (13), welches antriebseitig mit der Kupplung (19) und abtriebseitig mit der Hülse (12) zum rotatorischen Antreiben der Hülse (12) verbunden ist,
welche Hülse (12) zumindest teilweise im Hohlraum (111) angeordnet ist und durch eine Öffnung (112) im Korpus (11) am vorderen Ende (1a) tritt oder im Hohlraum (111) vor oder an der Öffnung (112) des Korpus (11) endet,
vorzugsweise bei der ein Innenumfang (I) der Hülse (12) die Öffnung (18) des Winkelstücks (1) definiert,
vorzugsweise bei der die Hülse (12) die Form eines Zylindermantels aufweist,
vorzugsweise bei der sich der Poliereinsatz (2) durch die Hülse (12) erstreckt.

4. Vorrichtung nach Anspruch 3,
bei der der Polierkopf (21) des Poliereinsatzes (2) lösbar aber kraft- oder formschlüssig in der Hülse (12) gelagert ist zum Bewirken einer Rotation des Polierkopfes (21) bei angetriebenem Getriebe (13),
vorzugsweise bei der eine innere Mantelfläche (A3) der Hülse (12) eine oder mehrere Vertiefungen oder Erhebungen (121) aufweist, in welche ein oder mehrere Erhebungen beziehungsweise Vertiefungen an einem Aussenumfang des Polierkopfes (21) eingreifen und eine Rotationssicherung des Polierkopfes (21) gegen die Hülse (12) bewirken,
vorzugsweise bei der der Polierkopf (21) einen Polierkelch oder eine Polierbürste aufweist.

5. Vorrichtung nach einem der Ansprüche 3 oder 4,
bei dem die Hülse (12) mittels ein oder mehrerer Wälzlager, insbesondere Kugellager, im Korpus (11) des Winkelstücks (1) gelagert ist,
bei dem die Hülse (12) an ihrer äusseren Mantelfläche (A4) durch das Getriebe (13) rotatorisch angetrieben wird,
vorzugsweise bei dem die Hülse (12) an ihrer äusseren Mantelfläche (A4) einen Zahnkranz (122) aufweist, vorzugsweise integriert in die Hülse (12) oder an der Hülse (12) angebracht, in den ein Zahnrad (131) des Getriebes (13) eingreift zum rotatorischen Antreiben der Hülse (12).

6. Vorrichtung nach einem der vorhergehenden Ansprüche, bei der das Winkelstück (1) umfasst:
einen Kolben (15) zum Austreiben des Poliermaterials (23) aus der Kartusche (22),
ein weiteres Getriebe (16), welches antriebseitig mit der Kupplung (19) und abtriebseitig mit dem Kolben (15) verbunden ist zum translatorischen, insbesondere geradlinig translatorischen Antreiben des Kolbens (15) .

7. Vorrichtung nach Anspruch 6 in Verbindung mit Anspruch 2,
bei der der Kolben (15) in dem Hohlraum (111) geführt ist,
bei der der Hohlraum (111) die Kartusche (22) aufnimmt,
vorzugsweise bei der der Hohlraum (111) durch eine Aussparung im Korpus (11) gebildet wird,
vorzugsweise bei der der Korpus (11) ein Gehäuse (113) aufweist für das Getriebe (13) und für das weitere Getriebe (16), sowie ein rohrförmiges Element (114) im Gehäuse (113), wobei das Innere des rohrförmigen Elements (114) den Hohlraum (111) zumindest mitdefiniert,
vorzugsweise bei der die Kartusche (22) aus elastischem Material hergestellt ist,
vorzugsweise bei der die Kartusche (22) schlauchförmig ausgebildet ist,
vorzugsweise bei der das Poliermittel (23) ein pastöses Material ist.

8. Vorrichtung nach einem der vorhergehenden Ansprüche 3 bis 5 in Verbindung mit Anspruch 6,
bei der das Getriebe (13) eine über die Kupplung (19) eingetragene Drehzahl in eine erste Drehzahl umsetzt, vorzugsweise untersetzt,
bei der das weitere Getriebe (16) die über die Kupplung (19) eingetragene Drehzahl in eine zweite Drehzahl umsetzt, vorzugsweise untersetzt,
bei der die zweite Drehzahl niedriger ist als die erste Drehzahl,
vorzugsweise bei der das weitere Getriebe (16) ausgebildet ist zum Umsetzen der zweiten Drehzahl in einen geradlinigen Vorschub des Kolbens (15).

9. Vorrichtung nach einem der vorhergehenden Ansprüche,
bei der der Polierkopf (21) und die Kartusche (22) rotationsfrei miteinander verbunden sind,
vorzugsweise bei der der Poliereinsatz (2) weiterhin umfasst eine Manschette (24) zwischen Polierkopf (21) und Kartusche (22) dergestalt, dass eine Rotation des Polierkopfes (21) nicht auf die Kartusche (22) übertragen wird.

10. Winkelstück (1) für eine zahnärztliche Antriebseinheit (3), aufweisend
- eine Öffnung (18) am seinem vorderen Ende (1a),
- eine Kupplung (19) zum Ankoppeln des Winkelstücks (1) an eine Antriebseinheit (3) an seinem hinteren Ende (1b)
- ein Befestigungsmittel zum lösbaren Aufnehmen eines Polierkopfes (21) eines Poliereinsatzes (2),
bei dem die Öffnung (18) dimensioniert ist zum Einführen einer mit Poliermaterial (23) befüllten und mit dem Polierkopf (21) zu dem Poliereinsatz (2) verbundenen Kartusche (22) durch die Öffnung (18) in das Winkelstück (1) .

11. Winkelstück (1) nach Anspruch 10, aufweisend
einen Korpus (11) mit einem Hohlraum (111) in seinem Inneren zur Aufnahme der Kartusche (22), welcher Hohlraum (111) in die Öffnung (18) mündet,
eine im Korpus (11) rotierend gelagerte Hülse (12),
ein Getriebe (13), welches antriebseitig mit der Kupplung (19) und abtriebseitig mit der Hülse (12) zum rotatorischen Antreiben der Hülse (12) verbunden ist,
welche Hülse (12) zumindest teilweise im Hohlraum (111) angeordnet ist und durch eine Öffnung (112) im Korpus (11) am vorderen Ende (1a) tritt oder im Hohlraum (111) vor oder an der Öffnung (112) des Korpus (11) endet,
vorzugsweise bei dem ein Innenumfang (I) der Hülse (12) die Öffnung (18) des Winkelstücks (1) definiert,
vorzugsweise bei dem die Hülse (12) die Form eines Zylindermantels aufweist,
vorzugsweise bei der eine innere Mantelfläche (A3) der Hülse (12) eine oder mehrere Vertiefungen oder Erhebungen (121) als Befestigungsmittel für den Polierkopf (21) aufweist,
vorzugsweise bei dem die Hülse (12) mittels ein oder mehrerer Wälzlager, insbesondere Kugellager (14), im Korpus (11) gelagert ist,
vorzugsweise bei dem die Hülse (12) an ihrer äusseren Mantelfläche (A4) durch das Getriebe (13) rotatorisch angetrieben wird,
vorzugsweise bei dem die Hülse (12) an ihrer äusseren Mantelfläche (A4) einen Zahnkranz (122) aufweist, vorzugsweise integriert in die Hülse (12) oder an der Hülse (12) angebracht, in den ein Zahnrad (131) des Getriebes (13) eingreift zum rotatorischen Antreiben der Hülse (12).

12. Winkelstück nach Anspruch 10 oder Anspruch 11, aufweisend:
einen Kolben (15) zum Austreiben des Poliermaterials (23) aus der Kartusche (22) bei eingesetztem Poliereinsatz (2),
ein weiteres Getriebe (16), welches antriebseitig mit der Kupplung (19) und abtriebseitig mit dem Kolben (15) verbunden ist zum translatorischen, insbesondere geradlinig translatorischen Antreiben des Kolbens (15),
bei dem der Kolben (15) in dem Hohlraum (111) geführt ist,
vorzugsweise bei der der Hohlraum (111) durch eine Aussparung im Korpus (11) gebildet wird,
vorzugsweise bei der der Korpus (11) ein Gehäuse (113) aufweist für das Getriebe (13) und für das weitere Getriebe (16), sowie ein rohrförmiges Element (114) im Gehäuse (113), wobei das Innere des rohrförmigen Elements (114) den Hohlraum (111) zumindest mitdefiniert.

13. Poliereinsatz (2) für ein zahnärztliches Winkelstück (1), umfassend
- einen Polierkopf (21) zum Polieren von Zähnen, und
- eine Kartusche (22) zur Aufnahme eines Poliermaterials (23),
vorzugsweise wobei der Poliereinsatz (2) ein Einwegprodukt ist vorgesehen zur Anwendung bei nur einem Nutzer.

14. Poliereinsatz (2) nach Anspruch 13,
bei der der Polierkopf (21) und die Kartusche (22) rotationsfrei miteinander verbunden sind,
vorzugsweise bei der der Poliereinsatz (2) weiterhin umfasst eine Manschette (24) zwischen Polierkopf (21) und Kartusche (22) dergestalt, dass eine Rotation des Polierkopfes (21) nicht auf die Kartusche (22) übertragen wird,
vorzugsweise bei der die Kartusche (22) aus elastischem Material hergestellt ist,
vorzugsweise bei der die Kartusche (22) schlauchförmig ausgebildet ist,
vorzugsweise bei der das Poliermittel (23) ein pastöses Material ist.

15. Verfahren zum Bestücken eines Winkelstücks (1) nach einem der Ansprüche 10 bis 12 mit einem Poliereinsatz (2) nach einem der Ansprüche 13 oder 14, umfassend die Schritte:
- Einführen des Poliereinsatzes (2) mit der Kartusche (22) voran in die Öffnung (18) des Winkelstücks (1), und
- verdrehsicheres aber lösbares Anordnen des Polierkopfes (21) in der Hülse (12) des Winkelstücks (1).
